# EUROPEAN PATENT SPECIFICATION

(11) **EP 3 528 515 B1**
(45) Date of publication and mention of the grant of the patent: **28.04.2021**
(21) Application number: 17867733.2
(22) Date of filing: 06.11.2017
(51) Int. Cl.: H04W 4/06

(54) **DATA TRANSMISSION METHOD, APPARATUS, SYSTEM, TERMINAL, AND ACCESS NETWORK DEVICE**
DATENÜBERTRAGUNGSVERFAHREN, VORRICHTUNG, SYSTEM, ENDGERÄT UND ZUGANGSNETZWERKVORRICHTUNG
PROCÉDÉ, APPAREIL, SYSTÈME, TERMINAL DE TRANSMISSION DE DONNÉES ET DISPOSITIF DE RÉSEAU D'ACCÈS

(30) Priority: 04.11.2016 CN 201610978435
(43) Date of publication of application: 21.08.2019
(73) Proprietor: Huawei Technologies Co., Ltd., Longgang District Shenzhen, Guangdong 518129 (CN)
(72) Inventor: WANG, Tingting, Shenzhen, Guangdong 518129 (CN); HUANG, Qufang, Shenzhen, Guangdong 518129 (CN); ZENG, Qinghai, Shenzhen, Guangdong 518129 (CN)
(74) Representative: Pfenning, Meinig & Partner mbB
(86) International application number: PCT/CN2017/109470
(87) International publication number: WO 2018/082686

(56) References cited:
- EP-A1- 2 523 520
- WO-A1-2016/096007
- CN-A- 101 888 593
- CN-A- 103 796 320
- CN-A- 106 793 135
- US-A1- 2013 163 537
- INTEL CORPORATION: 'Resource Allocation for Scheduling Request' 3GPP TSG RAN WG1 MEETING #89, R1-1707394 19 May 2017, XP051263053
- HUAWEI ET AL.: 'Scheduling for URLLC' GPP TSG-RAN WG2 MEETING #95BIS, R2-166991 14 October 2016, XP051151401
- INTEL CORPORATION.: 'Scheduling Request Design for NR' 3GPP TSG-RAN WG1 #86BI R1-1610191 14 October 2016, XP051150211

## Description

### TECHNICAL FIELD

This application relates to the field of communications technologies, and in particular, to a data transmission method and apparatus, a system, a terminal, and an access network device.

### BACKGROUND

As communications technologies continuously develop, there are more types of communication services, and different types of communication services pose different requirements on a data transmission latency. The data transmission latency is a time from a time at which one of two communication parties needs to send service data to a time at which the service data is sent to the other party, and mainly includes a time for processing data by a communications device, a time required by the communications device to wait for an available data transmission resource, and a time used to transmit data by using the data transmission resource.

In a current Long Term Evolution (English: Long Term Evolution, LTE for short) system, both an uplink transmission resource and a downlink transmission resource are controlled by an evolved NodeB (English: eNodeB, eNB for short). If a terminal needs to send uplink service data, the terminal needs to first request an uplink transmission resource from the eNB, and can transmit the uplink service data only after obtaining the uplink transmission resource allocated by the eNB to the terminal.

Specifically, an uplink data transmission process usually includes the following steps: When the terminal needs to send uplink service data, the terminal first sends an uplink scheduling request (English: Scheduling Request, SR for short) to the eNB. After receiving the SR sent by the terminal, the eNB allocates an uplink transmission resource to the terminal, and sends related information of the allocated uplink transmission resource to the terminal. Then, the terminal sends a buffer status report (English: Buffer Status Report, BSR for short) to the eNB by using the uplink transmission resource allocated by the eNB. The eNB allocates again an uplink transmission resource to the terminal based on the received BSR, and sends, to the terminal, related information of the uplink transmission resource that is allocated again. Finally, the terminal sends the uplink service data to the eNB by using the uplink transmission resource that is allocated again.

In the foregoing process, the terminal needs to send two requests (the SR and the BSR) to the eNB, and the eNB needs to allocate two uplink transmission resources to the terminal and wait for an occasion to send the related information of the allocated uplink transmission resources to the terminal. In this case, a time for the terminal to obtain the uplink transmission resource that can be used to transmit the uplink service data is relatively long, causing a relatively long data transmission latency existing when the terminal sends the uplink service data to the eNB. Performing data transmission based on the foregoing data transmission process obviously cannot meet a requirement of a communication service posing a relatively high requirement on the data transmission latency, for example, an ultra-reliable and low-latency communications (English: Ultra-Reliable and Low-Latency Communications, URLLC for short) service requiring the data transmission latency to be less than 0.5 ms.

WO 2016/096007 A1 describes a method of a network node adapted to operate in association with first and second wireless communication devices associated with first and second latency requirements, respectively, wherein a latency of the second latency requirement is lower than a latency of the first latency requirement. The method comprises receiving a first scheduling request for uplink transmission by the first wireless communication device, and transmitting a first scheduling grant indicating an allocated first communication resource for the uplink transmission by the first wireless communication device. The method also comprises receiving (simultaneously with or after transmitting the first scheduling grant) a second scheduling request for uplink transmission by the second wireless communication device, determining whether the first communication resource and an allocated second communication resource for the uplink transmission by the second wireless communication device at least partly overlap, and transmitting a second scheduling grant indicating the second communication resource. The method further comprises (if it is determined that the first and second communication resources at least partly overlap) transmitting (to the first wireless communication device) a scheduling grant annulment instruction for preventing the uplink transmission by the first wireless communication device using the first communication resource.

US 2013/163537 A1 describes a method implemented in a user equipment (UE) for single carrier frequency division multiple access (SC-FDMA) within a wireless system includes receiving an assignment of a plurality of uplink scheduling request resources and comprising a plurality of SC-FDMA subcarriers of the wireless system. One of the plurality of uplink scheduling request resources is selected for transmission of scheduling requests. It is determined that a change in uplink scheduling request resource should be made. Upon determining that a change in scheduling request resource should be made, another of the assigned uplink scheduling request resources is selected for transmission of scheduling requests.

### SUMMARY

To resolve a prior-art problem that a relatively long data transmission latency existing when a terminal sends uplink service data, embodiments of the present invention provide data transmission methods, a terminal, and an access network device according to the independent claims. Technical solutions are as follows:

According to a first aspect, an embodiment of the present invention provides a data transmission method, where the method includes: sending, by a first terminal, an SR by using a scheduling request SR resource, where the SR is used to request to send uplink data of a specified service; determining, by the first terminal, an uplink transmission resource corresponding to the SR resource; and sending, by the first terminal, the uplink data of the specified service by using the uplink transmission resource corresponding to the SR resource.

The specified service may be any service configured by a base station, where service data of the service can be sent by using the uplink transmission resource corresponding to the SR resource. The base station may configure one or more services as specified services. During implementation, the base station may configure the specified service by using radio resource configuration signaling or signaling at another layer.

In this embodiment of the present invention, the SR resource and the uplink transmission resource corresponding to the SR resource are allocated to the terminal in advance. When the terminal needs to transmit the uplink data of the specified service, the terminal may first send the SR by using the SR resource, to indicate that the terminal needs to send data of the specified service to an access network device. Then, the terminal sends the uplink data of the specified service by using the uplink transmission resource corresponding to the SR resource. Therefore, a time required by the terminal to obtain the uplink transmission resource used to transmit the uplink data can be significantly reduced, and a data transmission latency of the uplink data of the specified service can be reduced.

In a first possible implementation of the first aspect, the sending, by a terminal, an SR by using an SR resource includes: sending the SR by using the SR resource when an uplink transmission resource available for the first terminal does not exist in an uplink transmission resource between the SR resource and the uplink transmission resource corresponding to the SR resource. However, the SR is not sent when the uplink transmission resource available for the first terminal exists in the uplink transmission resource between the SR resource and the uplink transmission resource corresponding to the SR resource. Subsequently, data of the specified service is directly transmitted by using the uplink transmission resource that is available for the first terminal and that exists between the SR resource and the uplink transmission resource corresponding to the SR resource, so that the data transmission latency of the uplink data of the specified service can be further reduced.

According to a second aspect, an embodiment of the present invention further provides a data transmission method, where the method includes: receiving, by a second terminal, sending cancelation instruction information sent by the access network device, where the sending cancelation instruction information is sent by the access network device to the second terminal after the access network device receives an SR sent by a first terminal by using an SR resource, and the sending cancelation instruction information is received by the second terminal after obtaining an uplink transmission resource allocated by the access network device to the second terminal; and canceling, by the second terminal based on the sending cancelation instruction information, data sending on the uplink transmission resource allocated to the second terminal.

In this embodiment of the present invention, after receiving the SR that is used to request to send uplink data of a specified service and that is sent by the first terminal, the access network device sends the sending cancelation instruction information to the second terminal, to instruct the second terminal to cancel data sending on the uplink transmission resource allocated to the second terminal. Therefore, when no data of the specified service needs to be transmitted, the uplink transmission resource can be dynamically or semi-statically allocated to another terminal for use, and utilization of the uplink transmission resource can be increased.

In a first possible implementation of the second aspect, the method further includes:
receiving, by the second terminal, conflict uplink transmission resource information sent by the access network device, where the conflict uplink transmission resource information includes information about some or all of uplink transmission resources that are used to transmit a specified service and that are allocated by the access network device to all terminals.

With reference to the first possible implementation of the second aspect, in a second possible implementation, the canceling, by the second terminal based on the instruction information, data sending on the uplink transmission resource allocated to the second terminal includes: determining, by the second terminal based on the obtained conflict uplink transmission resource information, an uplink transmission resource that overlaps an uplink transmission resource indicated by the conflict uplink transmission resource information and that is in the uplink transmission resource allocated to the second terminal; and canceling, by the second terminal, data sending on the determined uplink transmission resource.

With reference to the first possible implementation of the second aspect, in a third possible implementation, the conflict uplink transmission resource information includes an identifier of the terminal and the uplink transmission resource that is used to transmit the specified service and that is corresponding to the identifier of the terminal, and the sending cancelation instruction information includes an identifier of the first terminal; and the determining, by the second terminal based on the obtained conflict uplink transmission resource information, an uplink transmission resource that overlaps an uplink transmission resource indicated by the conflict uplink transmission resource information and that is in the uplink transmission resource allocated to the second terminal includes: determining, by the second terminal based on the obtained conflict uplink transmission resource information, an uplink transmission resource that overlaps an uplink transmission resource corresponding to the identifier of the first terminal and that is in the uplink transmission resource allocated to the second terminal; and canceling, by the second terminal, data sending on the determined uplink transmission resource.

With reference to the first possible implementation of the second aspect, in a fourth possible implementation, the sending cancelation instruction information includes information about a time-frequency resource, and the canceling, by the second terminal based on the sending cancelation instruction information, data sending on the uplink transmission resource allocated to the second terminal includes: determining, by the second terminal, an uplink transmission resource that overlaps the time-frequency resource in the sending cancelation instruction information and that is in the uplink transmission resource allocated to the second terminal; and canceling, by the second terminal, data sending on the determined uplink transmission resource.

According to a third aspect, an embodiment of the present invention further provides a data transmission method, where the method includes: configuring, by an access network device for a first terminal, an SR resource and an uplink transmission resource corresponding to the SR resource, where the SR resource is used by the first terminal to send an SR, the SR is used to request to transmit data of a specified service, and the uplink transmission resource is used by the first terminal to send the data of the specified service; and sending, by the access network device, resource configuration information to the first terminal, where the resource configuration information includes information about the SR resource and information about the uplink transmission resource corresponding to the SR resource.

In a first possible implementation of the third aspect, the method further includes: receiving the SR sent by the first terminal by using the SR resource.

With reference to the first possible implementation of the third aspect, in a second possible implementation, the method further includes: after receiving the SR sent by the first terminal by using the SR resource, receiving, by the access network device, service data sent by the first terminal by using the uplink transmission resource corresponding to the SR resource.

With reference to the second possible implementation of the third aspect, in a third possible implementation, the method further includes: sending, by the access network device, sending cancelation instruction information to a second terminal, where the sending cancelation instruction information is used to instruct the second terminal to cancel data sending on an uplink transmission resource allocated by the access network device to the second terminal.

With reference to the third possible implementation of the third aspect, in a fourth possible implementation, the sending, by the access network device, sending cancelation instruction information to a second terminal includes: determining, by the access network device, whether an uplink transmission resource between the SR resource and the uplink transmission resource corresponding to the SR resource meets a specified condition; and if the uplink transmission resource between the SR resource and the uplink transmission resource corresponding to the SR resource does not meet the specified condition, sending the sending cancelation instruction information to the second terminal, where
the specified condition includes: an uplink transmission resource dedicated to the first terminal exists in the uplink transmission resource between the SR resource and the uplink transmission resource corresponding to the SR resource; or a contention resource available for the first terminal exists in the uplink transmission resource between the SR resource and the uplink transmission resource corresponding to the SR resource, and the access network device can successfully decode data sent by the first terminal by using the contention resource available for the first terminal.

With reference to the third possible implementation of the third aspect, in a fifth possible implementation, the method further includes:
sending, by the access network device, conflict uplink transmission resource information to the second terminal, where the conflict uplink transmission resource information includes information about a part or all of an uplink transmission resource that is used to transmit the specified service and that is allocated by the access network device to a terminal.

In the first aspect, the second aspect, and the third aspect, a transmission subframe of the SR and a transmission subframe of the sending cancelation instruction information are aligned in time; or
a transmission subframe of the uplink data of the specified service and a transmission subframe of the sending cancelation instruction information are aligned in time; or
a cell to which the SR resource used for the SR belongs and a cell to which a downlink transmission resource used for the sending cancelation instruction information belongs are a same cell or different cells.

The SR resource includes a frequency resource, a time resource, a code resource, or a time-frequency resource. One SR resource may be corresponding to one or more uplink transmission resources. One SR resource may occupy one subframe or a part of one subframe. Each uplink transmission resource may occupy one subframe or a part of one subframe.

The SR is physical layer signaling or higher layer signaling, and the physical layer signaling is a signal transmitted on a PUCCH channel or a PRACH channel.

According to a fourth aspect, an embodiment of the present invention provides a data transmission apparatus, where the apparatus includes units configured to implement the method in the first aspect, for example, a sending unit and a processing unit.

According to a fifth aspect, an embodiment of the present invention provides a data transmission apparatus, where the apparatus includes units configured to implement the method in the second aspect, for example, a receiving unit and a sending unit.

According to a sixth aspect, an embodiment of the present invention provides a data transmission apparatus, where the apparatus includes units configured to implement the method in the third aspect, for example, a processing unit and a sending unit.

According to a seventh aspect, an embodiment of the present invention provides a communications system, where the system includes an access network device and a first terminal, the first terminal includes the data transmission apparatus provided in any possible implementation of the first aspect, and the access network device includes the data transmission apparatus provided in any possible implementation of the third aspect.

Further, the system may further include a second terminal, and the second terminal includes the data transmission apparatus provided in any possible implementation of the second aspect.

According to an eighth aspect, an embodiment of the present invention further provides a terminal, where the terminal includes a processor, a memory, and a transceiver; the processor, the memory, and the transceiver are coupled by using a bus; the memory is configured to store a program instruction; and the processor executes the program instruction stored in the memory, to enable the terminal to perform the method in the first aspect or the second aspect.

According to a ninth aspect, an embodiment of the present invention further provides a computer readable medium, configured to store program code executed by a terminal, where the program code includes an instruction used to perform the method in the first aspect or the second aspect.

According to a tenth aspect, an embodiment of the present invention further provides an access network device, where the access network device includes a processor, a memory, and a transceiver; the processor, the memory, and the transceiver are coupled by using a bus; the memory is configured to store a program instruction; and the processor executes the program instruction stored in the memory, to enable the access network device to perform the method in the third aspect.

According to an eleventh aspect, an embodiment of the present invention further provides a computer readable medium, configured to store program code executed by an access network device, where the program code includes an instruction used to perform the method in the third aspect.

According to a twelfth aspect, an embodiment of the present invention further provides a communications chip, applied to a mobile communications system device, where the communications chip includes a processor, a memory, and a communications interface; the processor, the memory, and the communications interface are coupled by using a bus; the memory is configured to store a program instruction; and the processor executes the program instruction stored in the memory, to enable the communications system device on which the communications chip is installed to perform the method provided in any possible implementation of the first aspect, the second aspect, or the third aspect.

### BRIEF DESCRIPTION OF DRAWINGS

FIG. 1 is a schematic architectural diagram of a communications system according to an embodiment of the present invention;
FIG. 2 is a schematic diagram of a hardware structure of a terminal according to an embodiment of the present invention;
FIG. 3 is a schematic diagram of a hardware structure of an access network device according to an embodiment of the present invention;
FIG. 4 is a flowchart of a data transmission method according to an embodiment of the present invention;
FIG. 5a is a schematic diagram of a relationship among an SR resource, an uplink transmission resource corresponding to the SR resource, and a downlink transmission resource used for sending cancelation instruction information according to an embodiment of the present invention;
FIG. 5b is a schematic diagram of another relationship among an SR resource, an uplink transmission resource corresponding to the SR resource, and a downlink transmission resource used for sending cancelation instruction information according to an embodiment of the present invention;
FIG. 5c is a schematic diagram of another relationship among an SR resource, an uplink transmission resource corresponding to the SR resource, and a downlink transmission resource used for sending cancelation instruction information according to an embodiment of the present invention;
FIG. 5d is a schematic diagram of another relationship among an SR resource, an uplink transmission resource corresponding to the SR resource, and a downlink transmission resource used for sending cancelation instruction information according to an embodiment of the present invention;
FIG. 5e is a schematic diagram of another relationship among an SR resource, an uplink transmission resource corresponding to the SR resource, and a downlink transmission resource used for sending cancelation instruction information according to an embodiment of the present invention;
FIG. 6 is a flowchart of another data transmission method according to an embodiment of the present invention;
FIG. 7 is a schematic diagram of still another relationship among an SR resource, an uplink transmission resource corresponding to the SR resource, and a downlink transmission resource used for sending cancelation instruction information according to an embodiment of the present invention;
FIG. 8 is a flowchart of still another data transmission method according to an embodiment of the present invention;
FIG. 9 is a schematic structural diagram of a data transmission apparatus according to an embodiment of the present invention;
FIG. 10 is a schematic structural diagram of another data transmission apparatus according to an embodiment of the present invention;
FIG. 11 is a schematic structural diagram of another data transmission apparatus according to an embodiment of the present invention; and
FIG. 12 is a schematic architectural diagram of a communications chip according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

A "module" mentioned in this specification is a program or an instruction that is stored in a memory and that can implement some functions. A "unit" mentioned in this specification is a functional structure obtained through division based on logic. The "unit" may be implemented by hardware only or by a combination of software and hardware.

In this specification, "a plurality of' means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

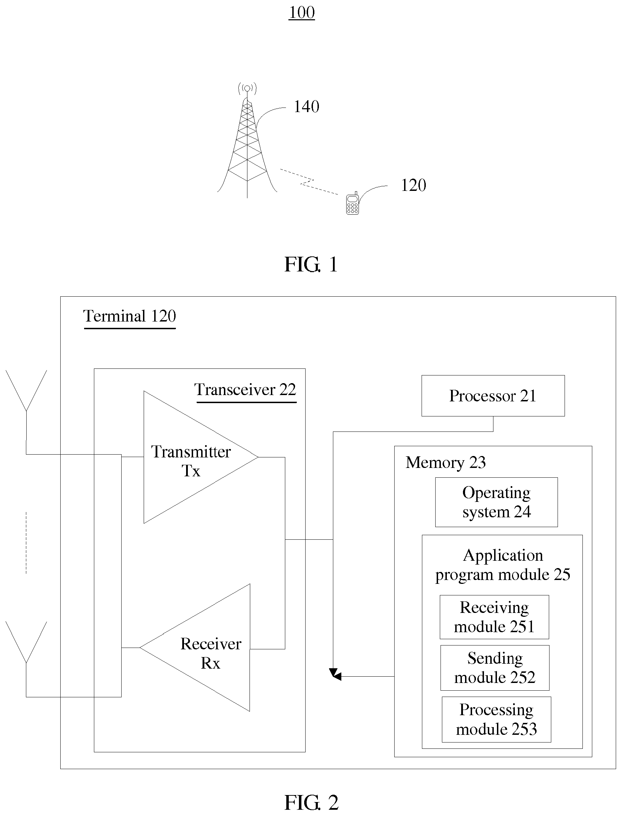

FIG. 1 is a schematic structural diagram of a communications system 100 according to an embodiment of the present invention. The communications system 100 may be an LTE system, a 5G system, or a subsequent evolved system of a 5G system, or may be another communications system in which a communication resource is allocated by one of two communication parties. The communications system 100 includes at least one terminal 120 and at least one access network device 140.

The terminal 120 may be a device such as a personal communications service (English: Personal Communication Service, PCS for short) phone, a cordless telephone set, a Session Initiation Protocol (English: Session Initial Protocol, SIP for short) phone, a wireless local loop (English: Wireless Local Loop, WLL for short) station, or a personal digital assistant (English: Personal Digital Assistant, PDA for short). The terminal may also be referred to as a system, a subscriber unit (Subscriber Unit), a subscriber station (Subscriber Station), a mobile station (Mobile Station), a mobile console (Mobile Console), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The terminal 120 communicates with one or more access network devices 140 through a radio access network (English: Radio Access Network, RAN for short).

The access network device 140 serves as a router between the terminal 120 and a remaining part of the access network, and the remaining part of the access network may include an Internet Protocol (English: Internet Protocol, IP for short) network. The access network device 140 may further coordinate attribute management of an air interface. For example, the access network device 140 may be a base transceiver station (English: Base Transceiver Station, BTS for short) in a Global System for Mobile Communications (English: Global System for Mobile Communication, GSM for short) or Code Division Multiple Access (English: Code Division Multiple Access, CDMA for short) system, or may be a NodeB (NodeB) in Wideband Code Division Multiple Access (English: Wideband Code Division Multiple Access, WCDMA for short) system, or may be an eNB in LTE system. This is not limited in the present invention.

It should be noted that, in this embodiment of the present invention, uplink means performing sending from a terminal to an access network device through a wireless interface, and downlink means performing sending from an access network device to a terminal through a wireless interface.

The terminal and the access network device that are provided to implement the embodiments of the present invention are described below with reference to a specific hardware structure.

FIG. 2 shows a hardware structure of a terminal 120 according to an embodiment of the present invention. As shown in FIG. 2, the terminal 120 includes a processor 21, a transceiver 22, and a memory 23.

The processor 21 includes one or more processing cores. The processor 21 runs a software program and a module, to perform various function applications and process information.

The transceiver 22 includes a receiver Rx and a transmitter Tx. The transceiver 22 may be further implemented as a communications chip. The communications chip may include a receiving module, a transmit module, a modulation/demodulation module, and the like, and is configured to modulate/demodulate information and receive or send the information by using a wireless signal.

The transceiver 22, the memory 23, and the processor 21 are coupled by using a bus. The memory 23 can be configured to store a software program and a module. The memory may store an operating system 24 and an application program module 25 required by at least one function.

The application program module 25 includes at least a receiving module 251 configured to receive information, a sending module 252 configured to send information, and a processing module 253 configured to process information. The receiving module 251 is configured to receive information that is about an SR resource and that is sent by an access network device and information that is about an uplink transmission resource corresponding to the SR resource and that is sent by the access network device. The sending module 252 is configured to send an SR by using the scheduling request SR resource, where the SR is used to request to send uplink data of a specified service. The processing module 253 is configured to determine the uplink transmission resource corresponding to the SR resource, where the uplink transmission resource corresponding to the SR resource is used by the terminal to send the uplink data of the specified service. The sending module 252 is further configured to send the uplink data of the specified service by using the uplink transmission resource corresponding to the SR resource.

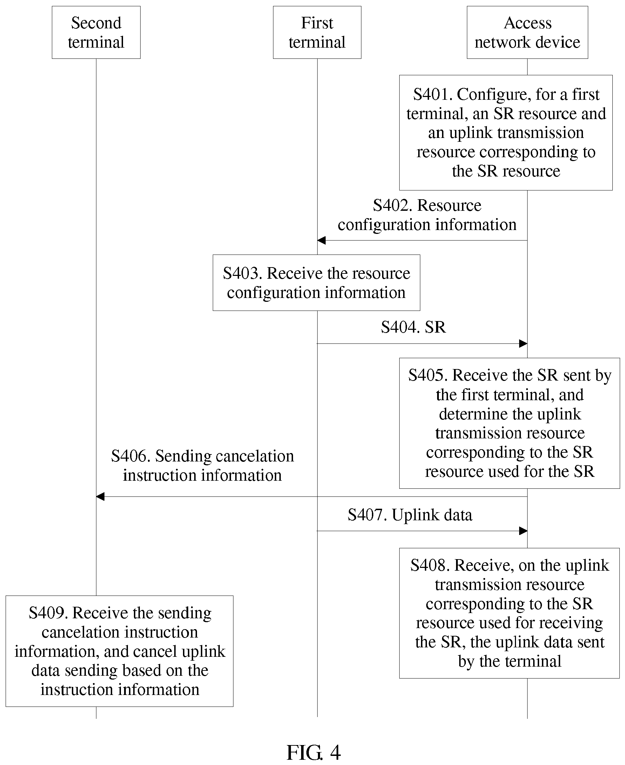

Optionally, the processor 21 is configured to execute the modules in the application program module 25, to implement steps that need to be performed by the first terminal in FIG. 4.

Alternatively, the receiving module 251 is configured to receive sending cancelation instruction information sent by the access network device, where the sending cancelation instruction information is sent by the access network device to the terminal after the access network device receives an SR sent by a first terminal by using an SR resource, and the sending cancelation instruction information is received by the terminal after obtaining an uplink transmission resource allocated by the access network device to the terminal. The processing module 251 is configured to cancel, based on the sending cancelation instruction information, data sending on the uplink transmission resource allocated to the terminal.

Correspondingly, the processor 21 is configured to execute the modules in the application program module 25, to implement steps that need to be performed by the second terminal in FIG. 4.

In addition, the memory 23 is a computer readable storage medium, and may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

A person skilled in the art may understand that the structure of the terminal 120 shown in FIG. 2 does not constitute a limitation on the terminal, and the terminal 120 may include components more or fewer than those shown in the figure, or combine some components, or have different component arrangements.

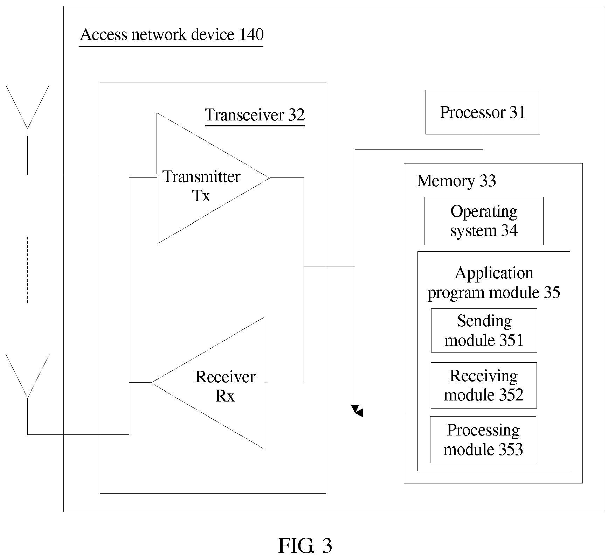

FIG. 3 shows a hardware structure of an access network device 140 according to an embodiment of the present invention. Referring to FIG. 3, the access network device 140 includes a processor 31, a transceiver 32, and a memory 33.

The processor 31 includes one or more processing cores. The processor 31 runs a software program and a module, to perform various function applications and process information.

The transceiver 32 includes a receiver Rx and a transmitter Tx. The transceiver 32 may be further implemented as a communications chip. The communications chip may include a receiving module, a transmit module, a modulation/demodulation module, and the like, and is configured to modulate/demodulate information and receive or send the information by using a wireless signal.

The transceiver 32, the memory 33, and the processor 31 are coupled by using a bus. The memory 33 can be configured to store a software program and a module. The memory may store an operating system 34 and an application program module 35 required by at least one function. The application program module 35 includes at least a sending module 351 configured to send information, a receiving module 352 configured to receive information, and a processing module 353 configured to process information. The processing module 353 is configured to configure, for a first terminal, an SR resource and an uplink transmission resource corresponding to the SR resource, where the SR resource is used by the first terminal to send an SR, the SR is used to request to transmit data of a specified service, and the uplink transmission resource is used by the first terminal to send the data of the specified service. The sending module 351 is configured to send the SR resource and the uplink transmission resource corresponding to the SR resource to the first terminal.

Optionally, the processor 31 is configured to execute the modules in the application program module 35, to implement steps that need to be performed by the access network device in FIG. 4.

In addition, the memory 33 is a computer readable medium, and may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

A person skilled in the art may understand that the structure of the access network device 140 shown in FIG. 3 does not constitute a limitation on the access network device, and the access network device 140 may include components more or fewer than those shown in the figure, or combine some components, or have different component arrangements.

FIG. 4 shows a data transmission method according to an embodiment of the present invention. The method is implemented by using the system shown in FIG. 1. In the embodiment shown in FIG. 4, detailed description is provided by using an example in which a time interval between a subframe in which an SR resource is located and a subframe in which an uplink transmission resource corresponding to the SR resource is located is relatively short. The method includes the following steps.

S401. An access network device configures, for a first terminal, an SR resource and an uplink transmission resource corresponding to the SR resource.

The SR resource is used by the first terminal to send an SR. The SR is used to request to send uplink data of a specified service. The uplink transmission resource corresponding to the SR resource is used by the first terminal to send the uplink data of the specified service. The specified service may be any service configured by a base station, where service data of the service can be sent by using the uplink transmission resource corresponding to the SR resource. The base station may configure one or more services as specified services. During implementation, the base station may configure the specified service by using radio resource configuration signaling or signaling at another layer. The specified service may be a service requiring a data transmission latency to be less than a specified value. The specified value may be, for example, 0.5 ms. Further, the specified service may be a URLLC (Ultra-Reliable and Low-Latency Communications, ultra-reliable and low-latency communications) service in a 5G system.

Specifically, the SR resource may be a frequency resource, a time resource, a code resource, or a time-frequency resource. The code resource is used to distinguish a plurality of terminals by using different code words when time-frequency resources are the same. This embodiment of the present invention is described below in detail as a possible implement in which the SR resource is a time-frequency resource.

The uplink transmission resource corresponding to the SR resource includes at least a time-frequency resource. Further, the uplink transmission resource corresponding to the SR resource may be a transmission time unit such as a complete subframe, or may be a part of a subframe. For example, the uplink transmission resource corresponding to the SR resource may be several consecutive columns of symbols of a subframe.

Further, in this embodiment, the SR resource may be a time-frequency resource, and an interval between the uplink transmission resource corresponding to the SR resource and the SR resource is one to eight subframes in time domain. That the interval between the uplink transmission resource corresponding to the SR resource and the SR resource is one subframe in time domain means that a subframe in which the uplink transmission resource corresponding to the SR resource is located is a next subframe of a subframe in which the SR resource is located.

It is easily known that, to reduce a data transmission latency of the uplink data, the time interval between the uplink transmission resource corresponding to the SR resource and the SR resource should not be excessively long. Therefore, the interval is usually one to eight subframes, and is preferably shorter than four subframes. Subject to a processing speed of the access network device, the time interval between the uplink transmission resource corresponding to the SR resource and the SR resource should not be excessively short either, and is at least one subframe.

In actual application, a length of a subframe may be fixed, that is, lengths of all subframes are the same. Alternatively, a length of a subframe may vary, that is, some subframes are long and some subframes are short.

It should be noted that, in this embodiment, the time-frequency resource serving as the SR resource periodically appears, and correspondingly, the uplink transmission resource corresponding to the SR resource also periodically appears. For example, if subframes in which time-frequency resources serving as SR resources are located are subframes whose numbers are even numbers and include a subframe 0, a subframe 2, a subframe 4..., and an interval between the subframe in which the SR resource is located and a subframe in which a time-frequency resource of an uplink transmission resource corresponding to the SR resource is located is one subframe, the uplink transmission resource corresponding to the SR resource appears in a subframe whose number is an odd number. Therefore, after the access network device allocates, to the first terminal, the SR resource and the uplink transmission resource corresponding to the SR resource, the first terminal may determine, based on a data transmission requirement of the specified service, whether to transmit data on the allocated SR resource and the allocated uplink transmission resource corresponding to the SR resource.

In addition, in the foregoing example, an uplink transmission resource corresponding to one SR resource includes one time-frequency resource. In another implementation, an uplink transmission resource corresponding to one SR resource may alternatively include a plurality of time-frequency resources. For example, subframes in which time-frequency resources serving as SR resources are located are a subframe 0, a subframe 2, a subframe 4..., but an uplink transmission resource corresponding to each SR resource includes three time-frequency resources, and the three time-frequency resources may appear once every two subframes. In this case, three time-frequency resources of an uplink transmission resource corresponding to an SR resource in the subframe 0 respectively appear in the subframe 2, the subframe 4, and a subframe 6, and three time-frequency resources of an uplink transmission resource corresponding to an SR resource in the subframe 2 respectively appear in the subframe 4, the subframe 6, and a subframe 8. Another case can be obtained by analogy.

Usually, a plurality of terminals simultaneously access one access network device, and the first terminal may be any one of all the terminals accessing the access network device. After configuring, for the accessed terminal, an SR resource and an uplink transmission resource corresponding to the SR resource, the access network device usually stores an identifier of the terminal and a correspondence between the SR resource and the uplink transmission resource. SR resources allocated to different terminals are different, and uplink transmission resources corresponding to different SR resources are also different.

During implementation, when the first terminal accesses the access network device, the access network device may configure, for the first terminal, the SR resource and the uplink transmission resource corresponding to the SR resource. However, no limitation is imposed. Alternatively, when the URLLC service of the first terminal starts, the access network device may configure, for the first terminal, the SR resource and the uplink transmission resource corresponding to the SR resource.

S402. The access network device sends resource configuration information to the first terminal.

The resource configuration information includes information about the SR resource allocated to the first terminal and information about the uplink transmission resource that is corresponding to the SR resource and that is allocated to the first terminal.

The information about the SR resource includes a location of the time-frequency resource serving as the SR resource, that is, may include a subframe number and a location of a time-frequency resource block, for example, a time-frequency resource block that is in the subframe 0 and that is corresponding to a sub-band 1 and a symbol 1.

In a first implementation, the information about the uplink transmission resource corresponding to the SR resource includes a location of the time-frequency resource of the uplink transmission resource corresponding to the SR resource, that is, may include a subframe number and a location of a time-frequency resource block.

In a second implementation, the information about the uplink transmission resource corresponding to the SR resource includes a location that is in a subframe and that is of the time-frequency resource of the uplink transmission resource corresponding to the SR resource, but the subframe is not specifically limited, for example, a time-frequency resource block of the sub-band 1 and the symbol 1.

In a third implementation, the information about the uplink transmission resource corresponding to the SR resource includes a size of the time-frequency resource of the uplink transmission resource corresponding to the SR resource, but a subframe in which the time-frequency resource is located and a location in the subframe are not limited.

During implementation, the information about the uplink transmission resource and the information about the SR resource may be separately sent (that is, a message carries the information about the SR resource, and another message carries the information about the uplink transmission resource corresponding to the SR resource), or may be sent together (that is, one message carries both the information about the SR resource and the information about the uplink transmission resource corresponding to the SR resource).

Optionally, the resource configuration information may further include other information such as one or more of a modulation and coding scheme (English: Modulation Code Schedule, MCS for short), a bit rate, and a transport block size (English: Transport Block Size, TBS for short).

When the resource configuration information further includes the TBS or the resource configuration information includes the MCS and the size of the time-frequency resource of the uplink transmission resource, the terminal may directly obtain or reckon a data block size, to learn of, in advance, the size of a data block that may be transmitted by the terminal on the uplink transmission resource corresponding to the SR resource. In this way, before sending the SR to the access network device by using the SR resource, the terminal may generate the data block and complete all corresponding processing, to wait to perform sending at a physical layer.

It should be noted that, when the first terminal generates the data block, if URLLC data is excessively large, the URLLC data may be sliced to generate the data block. If URLLC data is relatively small, padding (padding) may be performed by using unwanted data or data of another service.

S403. The first terminal receives the resource configuration information sent by the access network device.

After receiving the resource configuration information sent by the access network device, the first terminal stores the received resource configuration information, so that the resource configuration information is used when there is subsequent URLLC service data, for example, used to determine the SR resource to send the SR, used to determine the uplink transmission resource corresponding to the SR resource to send the URLLC service data, and used to determine the transport block size.

In a first implementation of step S403, the first terminal may directly determine, by using the resource configuration information, the uplink transmission resource corresponding to the SR resource. However, in a second implementation and a third implementation of step S403, the first terminal needs to determine, by using the resource configuration information and start location indication information (refer to related description of step S407) that is sent by the access network device, the uplink transmission resource corresponding to the SR resource.

S404. The first terminal sends an SR by using the SR resource.

When the terminal needs to send URLLC service data, the terminal notifies, by using the SR, the access network device that the terminal needs to send the URLLC service data. The SR may be sent by using physical layer signaling, for example, transmitted by using a physical uplink control channel (English: Physical Uplink Control Channel, PUCCH for short) in an LTE system or by using another physical channel such as a physical random access channel (English: Physical Random Access Channel, PRACH for short). Alternatively, the SR may be higher layer signaling such as a Media Access Control control element (English: Media Access Control Control Element, MAC CE for short), provided that the terminal can notify the access network device that there is URLLC service data to be sent.

One SR resource may occupy one subframe or only a part of one subframe. Because the SR has little content, and indicates "whether there is URLLC data" which is a relatively small amount of information and also requires a small quantity of transmission resources, the SR resource may occupy only a part of one subframe.

S405. The access network device receives the SR sent by the first terminal, and determines the uplink transmission resource corresponding to the SR resource used for the SR.

After the access network device receives the SR sent by the first terminal, the access network device may learn that the first terminal needs to send URLLC service data. After the uplink transmission resource corresponding to the SR resource used for the SR is determined, the URLLC service data sent by the first terminal may be received on the uplink transmission resource corresponding to the SR resource.

S406. The access network device sends sending cancelation instruction information to a second terminal.

Because the URLLC service does not often have data to be sent, to avoid a resource waste, the access network device allocates, to another terminal different from the first terminal in another manner (for example, through dynamic scheduling or semi-static scheduling), the uplink transmission resource configured for the first terminal. The second terminal is one or more another terminals to which an uplink transmission resource the same as the uplink transmission resource allocated to the first terminal is allocated. If receiving the SR sent by the first terminal by using the SR resource, the access network device sends the sending cancelation instruction information to the second terminal. The sending cancelation instruction information is used to instruct the second terminal to cancel data sending on an uplink transmission resource allocated by the access network device to the second terminal. After receiving the sending cancelation instruction information, the second terminal cancels data sending on the uplink transmission resource allocated by the access network device to the second terminal. If the access network device does not receive the SR sent by the first terminal by using the SR resource, the access network device does not send the sending cancelation instruction information to the second terminal, and the second terminal sends data by using an uplink transmission resource allocated to the second terminal. To be specific, in this case, if the uplink transmission resource used by the first terminal to transmit the specified service overlaps the uplink transmission resource allocated by the access network device to the second terminal, only one of the first terminal and the second terminal can send data by using the overlapped uplink transmission resource.

In an implementation, the sending cancelation instruction information may be explicit. For example, the instruction information may be carried in downlink control information (English: Downlink Control Information, DCI for short), and is sent by using a physical downlink control channel (English: Physical Downlink Control Channel, PDCCH for short). In another implementation, the sending cancelation instruction information may be implicit. For example, the second terminal is enabled to be corresponding to a location of a physical resource (a correspondence is preconfigured). If a specified value (such as 1) is transmitted on the physical resource, it indicates that the second terminal is instructed to cancel sending; or if no specified value is transmitted on the physical resource, it indicates that the second terminal is not instructed to cancel sending. Alternatively, an uplink transmission resource is enabled to be corresponding to a location of a physical resource (a correspondence is preconfigured). If the uplink transmission resource is used by the first terminal to send URLLC service data, the access network device sends a specified value (such as 1) on the physical resource corresponding to the uplink transmission resource, to instruct the second terminal to cancel sending.

Correspondingly, the method in this embodiment further includes the following:

The access network device allocates an uplink transmission resource to the second terminal. The uplink transmission resource the same as the uplink transmission resource configured for the first terminal may be a part of the uplink transmission resource allocated to the second terminal, that is, the uplink transmission resource allocated to the second terminal partially overlaps the uplink transmission resource corresponding to the SR resource of the first terminal.

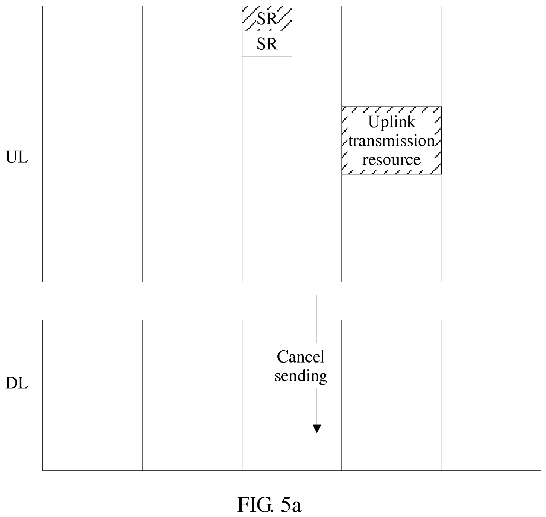

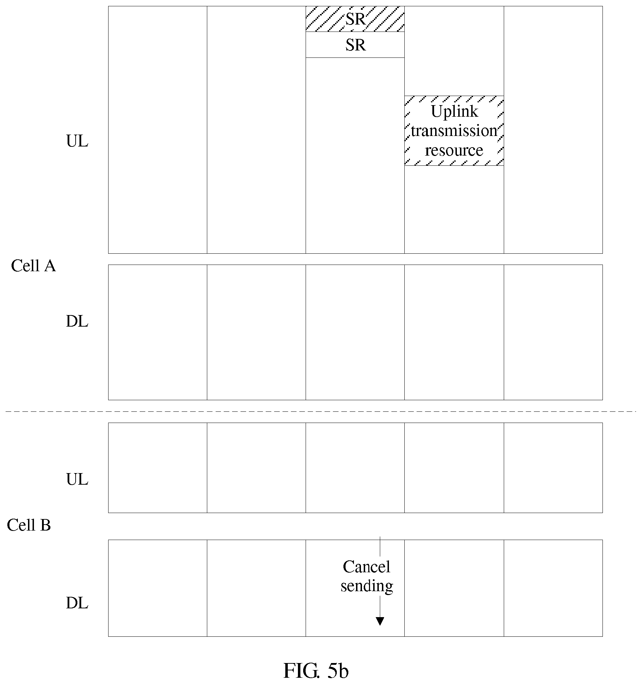

In a first scenario, the first terminal and the second terminal transmit data to the access network device by using a same cell (for example, by using a cell (English: Cell) A). The first terminal sends the SR to the access network device, to indicate that the first terminal needs to send URLLC service data by using the cell A, and the SR occupies only a part of one subframe. After receiving the SR sent by the first terminal, the access network device may immediately send the sending cancelation instruction information to the second terminal. As shown in FIG. 5a and FIG. 5b, the sending cancelation instruction information and the SR sent by the first terminal may be within a same subframe time. In the scenario, data is transmitted between the second terminal and the access network device by using at least one cell, and the at least one cell includes the cell A.

Further, that the sending cancelation instruction information and the SR are within the same subframe time may include two cases:

In a first case, as shown in FIG. 5a, a subframe (an uplink subframe) in which the SR received by the access network device is located and a subframe (a downlink subframe) in which the sending cancelation instruction information is sent are aligned in time.

In a second case, a subframe in which the SR received by the access network device is located and a subframe in which the sending cancelation instruction information is sent are a same subframe, that is, in one subframe, some symbols are used to transmit uplink data and some symbols are used to transmit downlink data.

In a second scenario, the first terminal sends the SR to the access network device, to indicate that the first terminal needs to send URLLC service data by using a cell A. Data is transmitted between the second terminal and the access network device by using at least two cells. For example, the second terminal transmits data by using both the cell A and a cell B. The access network device allocates an uplink transmission resource in the cell A to the second terminal. However, because the first terminal needs to transmit the URLLC data, the second terminal needs to cancel data sending in the cell A. In this case, the access network device may send the sending cancelation instruction information to the second terminal by using the cell B.

In this embodiment of the present invention, a cell may be a continuous band, and the access network device arranges transmission of all data in the band.

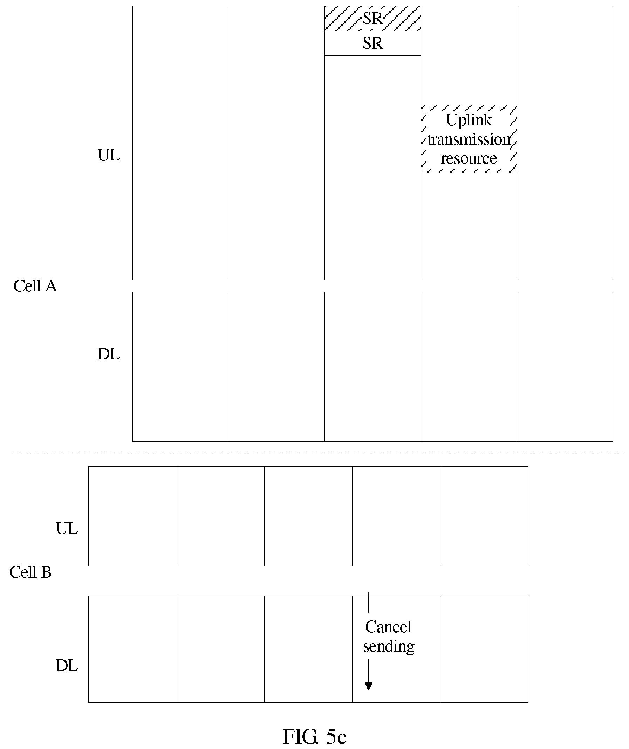

In the second scenario, as shown in FIG. 5b, if subframe boundaries of the cell A and the cell B are aligned, the access network device may send the sending cancelation instruction information in a latter part of a subframe that is of the cell B and that is aligned with a transmission subframe of the SR. Alternatively, as shown in FIG. 5c, if subframe boundaries of the cell A and the cell B are not aligned, the access network device may transmit the sending cancelation instruction information in a former part of a subframe that is of the cell B and that is corresponding to a transmission subframe of the SR. Compared with the manner shown in FIG. 5b, an existing subframe format may not be changed in the manner shown in FIG. 5c, and a reason lies in that in the existing subframe format, one subframe includes a plurality of columns of symbols, symbols in each column of symbols are corresponding to different sub-bands, and physical layer signaling is sent on the first several symbols of the subframe.

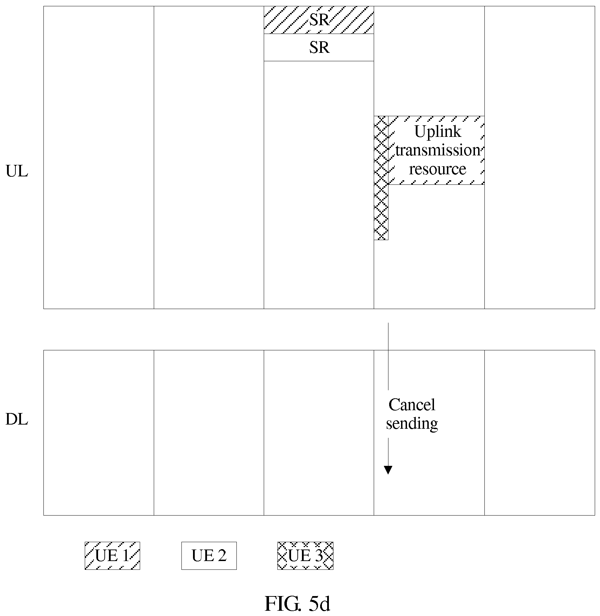

In a third scenario, both the first terminal and the second terminal transmit data to the access network device by using a cell A. The first terminal sends the SR to the access network device, to indicate that the first terminal needs to send URLLC service data by using the cell A. The SR occupies one subframe, and the uplink transmission resource corresponding to the SR resource locates in the next subframe of the subframe in which the SR resource is located. As shown in FIG. 5d, after receiving the SR sent by the first terminal, the access network device may send the sending cancelation instruction information to the second terminal in the next subframe (the first several columns of symbols of the next subframe) of the subframe in which the SR resource is located.

Optionally, in the third scenario, the SR may alternatively occupy only a part of one subframe.

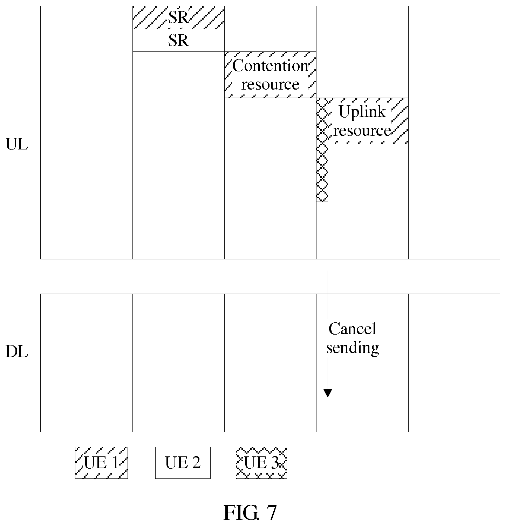

It should be noted that, in FIG. 5a to FIG. 5e and FIG. 7, one square box represents one subframe. In addition, five subframes in each of the figures are used as an example for description, and are not used to limit a quantity of subframes.

S407. The first terminal sends uplink data by using the uplink transmission resource corresponding to the SR resource.

As shown in each of FIG. 5a to FIG. 5d, the uplink transmission resource corresponding to the SR resource is located in the next subframe of the SR resource. In the cases shown in FIG. 5a to FIG. 5c, the first terminal directly sends the uplink data by using the uplink transmission resource corresponding to the SR resource. However, in the scenario shown in FIG. 5d, the transmission subframe of the sending cancelation instruction information and the subframe in which the uplink transmission resource corresponding to the SR resource used for the SR sent by the first terminal is located are aligned in time. In this case, step S407 may include the following:

The first terminal receives start location indication information sent by the access network device, where the start location indication information is used to indicate a location of a start symbol on which the first terminal starts to send the uplink data of the specified service, that is, the start location indication information is used to instruct the first terminal to start to send the uplink data of the specified service on a specific symbol of the uplink transmission resource corresponding to the SR resource; and
the first terminal sends, based on the start location indication information, the uplink data by using the uplink transmission resource corresponding to the SR resource.

The start location indication information may be sent to the first terminal by using higher layer signaling (such as RRC signaling) or physical layer signaling (such as DCI).

Further, the location of the start symbol is determined by the access network device based on a distance between the second terminal and the access network device. If the distance between the second terminal and the access network device changes, the access network device may reconfigure the location that is of the start symbol and that is indicated by the start location indication information. In this way, it can be ensured that the first terminal starts to send the uplink data of the specified service only after the second terminal stops sending data on the uplink transmission resource on which the first terminal needs to send the uplink data of the specified service.

In another implementation, the start location indication information may be used to indicate, to the first terminal, an occasion for starting to send the uplink data of the specified service, namely, a number of a subframe in which the uplink transmission resource for sending the uplink data of the specified service is located. This is corresponding to the second implementation of step S402. In the manner, after sending the SR to the access network device, the first terminal determines a transport block size based on a location and a size that are of the uplink transmission resource and that are received in advance, generates a transport block based on the size, and sends the transport block based on the start location indication information after receiving the start location indication information sent by the access network device. In the manner, the access network device may dynamically control a transmission occasion of the first terminal, and select a conflict-free subframe for the first terminal to transmit the uplink data.

In still another implementation, the start location indication information may be used to indicate, to the first terminal, an occasion for starting to send the uplink data of the specified service, namely, a number of a subframe in which the uplink transmission resource for sending the uplink data of the specified service is located and a location of the uplink transmission resource in the subframe. After sending the SR to the access network device, the first terminal determines a transport block size based on a transport block size received in advance or a size that is of the uplink transmission resource and that is received in advance, generates a transport block based on the size, and sends the transport block based on the start location indication information after receiving the start location indication information sent by the access network device. In the manner, the access network device may dynamically control a transmission occasion of the first terminal, and select a conflict-free resource location for the first terminal to transmit the uplink data.

Further, in the foregoing implementation, if the access network device instructs the first terminal to send the transport block at a time-frequency resource location in a subframe, when the start location indication information includes more than one time-frequency resource (namely, the uplink transmission resource) start location or the start location indication information includes more than one time-frequency resource format (English: Numerology), the first terminal prepares a corresponding data block for each time-frequency resource, and sends a transport block by using each time-frequency resource. Content of the transport blocks is different. That formats of time-frequency resources are the same means that the following three conditions are all met for a smallest time-frequency resource granularity: When time lengths are equal, sub-band widths are equal, and cyclic prefix (English: Cyclic Prefix, CP for short) lengths and payload (English: Payload) lengths in the time-frequency resources are equal, the formats of the time-frequency resources are considered to be the same.

In the foregoing two specific implementations, if the access network device cannot determine a conflict-free resource, the access network device may send the sending cancelation instruction information to the second terminal, to instruct the second terminal to cancel uplink data sending.

S408. The access network device receives, on the uplink transmission resource corresponding to the SR resource used for receiving the SR, the uplink data sent by the terminal.

S409. The second terminal receives the sending cancelation instruction information, and cancels uplink data sending based on the instruction information.

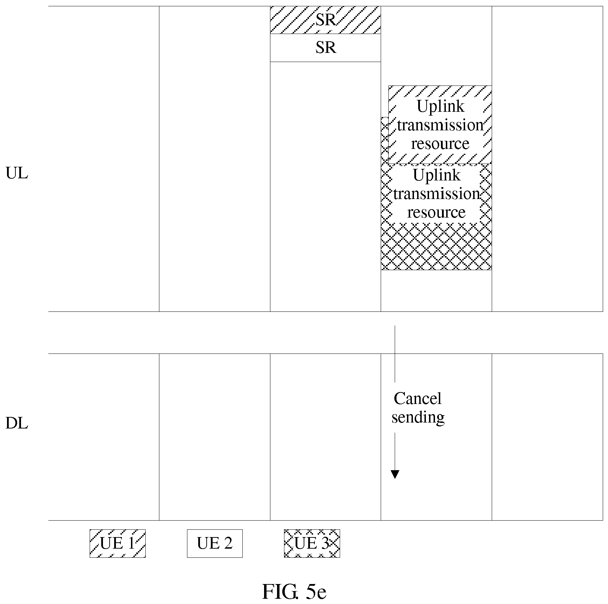

In an implementation, canceling uplink data sending may be canceling data sending on all uplink transmission resources allocated to the second terminal. In another implementation, canceling uplink data sending may be canceling data sending on some uplink transmission resources allocated to the second terminal, that is, as shown in FIG. 5e, the second terminal normally transmits data on some uplink transmission resources on which data transmission is not canceled and that are in the allocated uplink transmission resources.

The another implementation may have the following several cases:

In a first case, the access network device sends conflict uplink transmission resource information to the second terminal. The conflict uplink transmission resource information includes information about some or all of uplink transmission resources that are used to transmit a specified service and that are allocated by the access network device to all terminals. In this case, step S409 may include the following:

The second terminal determines, based on the obtained conflict uplink transmission resource information, an uplink transmission resource that overlaps an uplink transmission resource indicated by the conflict uplink transmission resource information and that is in the uplink transmission resource allocated to the second terminal; and
the second terminal cancels data sending on the determined uplink transmission resource.

It should be noted that, when the conflict uplink transmission resource information in the first case includes the information about some of the uplink transmission resources that are used to transmit the specified service and that are allocated by the access network device to all the terminals, the access network device needs to ensure the following: The access network device does not allocate, to the second terminal, an uplink transmission resource other than the uplink transmission resource indicated by the conflict uplink transmission resource information, to prevent the uplink transmission resource on which the first terminal sends the uplink data of the specified service from conflicting with the uplink transmission resource allocated to the second terminal.

In a second case, the conflict uplink transmission resource information includes an identifier of a terminal and an uplink transmission resource that is used to transmit the specified service and that is corresponding to the identifier of the terminal, and the sending cancelation instruction information includes an identifier of the first terminal.

Step S409 may include the following:

The second terminal determines, based on the obtained conflict uplink transmission resource information, an uplink transmission resource that overlaps an uplink transmission resource corresponding to the identifier of the first terminal and that is in the uplink transmission resource allocated to the second terminal; and
the second terminal cancels data sending on the determined uplink transmission resource.

In a third case, the sending cancelation instruction information includes information about a time-frequency resource, and step S409 may include the following:

The second terminal determines an uplink transmission resource that overlaps the time-frequency resource in the sending cancelation instruction information and that is in the uplink transmission resource allocated to the second terminal; and
the second terminal cancels data sending on the determined uplink transmission resource.

In addition, if the second terminal performs uplink transmission through code division, the sending cancelation instruction information further includes code channel information used to instruct the second terminal to cancel sending on specific code channels.

In the another implementation, if data sent by the second terminal includes a power headroom report (English: Power Headroom Report, PHR for short), the second terminal does not modify a power headroom value in the PHR due to cancelation of sending in some bands.

In the another implementation, if the second terminal is sending data when receiving the sending cancelation instruction information, the second terminal stops sending a currently transmitted data block, but the current transmission is still counted in a quantity of transmission times. Alternatively, if the second terminal receives the sending cancelation instruction information before starting sending data, the current transmission is also counted in a quantity of transmission times. To be specific, counters that are of the quantity of transmission times and are stored in the access network device and the second terminal are still increased by 1. Because a data transmission time is usually obtained by the second terminal by collecting statistics about the quantity of transmission times, the manner can help the second terminal to record the data transmission time.

Optionally, in the another implementation, the method in this embodiment may further include the following:

The access network device receives capability information reported by the second terminal, where the capability information includes indication information used to indicate whether the second terminal supports sending cancelation in some sub-bands.

After receiving the capability information reported by the second terminal, the access network device may send a configuration parameter to the second terminal by using, for example, an RRC message. The configuration parameter is used to indicate whether the second terminal cancels sending in some sub-bands when receiving the sending cancelation instruction information sent by the access network device. Alternatively, the access network device may not send a configuration parameter, but terminals that can support, by default, sending cancelation in some sub-bands cancel sending in the some sub-bands when receiving the sending cancelation instruction information sent by the access network device.

It should be noted that, if the access network device allocates the uplink transmission resource to the second terminal before the first terminal sends the SR by using the SR resource, and the access network device considers that the uplink transmission resource allocated to the second terminal may be preempted by the specified service of the first terminal, a relatively robust MCS may be allocated to the second terminal, for example, an MCS that may be used to reduce a block error rate to be less than a specified value (the specified value may be less than 10%). In this way, when only some resources of the second terminal are preempted and the second terminal sends data only by using a resource that is not preempted, a probability that the access network device successfully decodes the data sent by the second terminal is increased, thereby increasing a throughput of an entire cell.

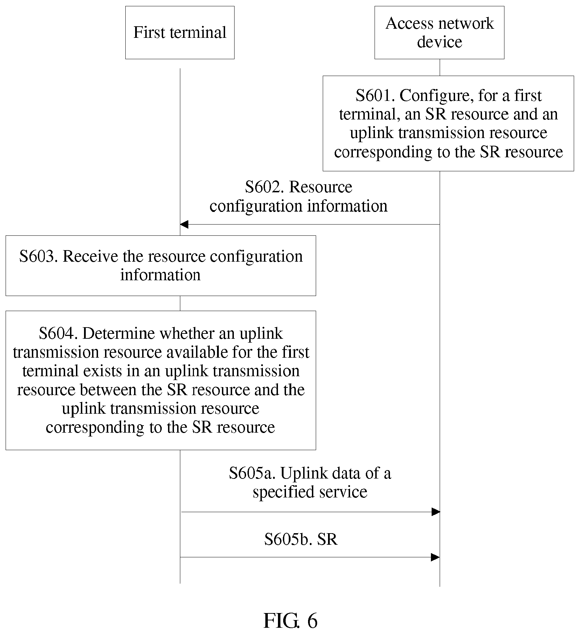

FIG. 6 shows a data transmission method according to an embodiment of the present invention. The method is implemented by using the system shown in FIG. 1. In the embodiment shown in FIG. 6, detailed description is provided by using an example in which a time interval between a subframe in which an SR resource is located and a subframe in which an uplink transmission resource corresponding to the SR resource is located is relatively long. The method includes the following steps.

S601. An access network device configures, for a first terminal, an SR resource and an uplink transmission resource corresponding to the SR resource.

For specific implementation, refer to step S401. Detailed description is omitted herein.

S602. The access network device sends resource configuration information to the first terminal.

For specific implementation, refer to step S402. Detailed description is omitted herein.

S603. The first terminal receives the resource configuration information sent by the access network device.

For specific implementation, refer to step S403. Detailed description is omitted herein.

S604. The first terminal determines whether an uplink transmission resource available for the first terminal exists in an uplink transmission resource between the SR resource and the uplink transmission resource corresponding to the SR resource; and if the uplink transmission resource available for the first terminal exists in the uplink transmission resource between the SR resource and the uplink transmission resource corresponding to the SR resource, performs step S605a; or if the uplink transmission resource available for the first terminal does not exist in the uplink transmission resource between the SR resource and the uplink transmission resource corresponding to the SR resource, performs step S605b.

S605a. The first terminal sends uplink data of a specified service by using the uplink transmission resource available for the first terminal.

S605b. The first terminal sends an SR by using the SR resource.

It should be noted that the first terminal may need to send data of a non-specified service (namely, a service other than the specified service), and the access network device allocates, to the first terminal, an uplink transmission resource (including a dedicated resource or an available contention resource) used to send the data of the non-specified service, but the uplink transmission resource used to send the data of the non-specified service may exist between the SR resource of the first terminal and the uplink transmission resource corresponding to the SR resource. To reduce a transmission latency of the uplink data of the specified service, the first terminal preferably sends the uplink data of the specified service on the uplink transmission resource used to send the data of the non-specified service.

After the access network device receives the SR sent by the first terminal by using the SR resource, for related actions of the access network device, the first terminal, and a second terminal, refer to step S405 to step S409. Detailed description is omitted herein.

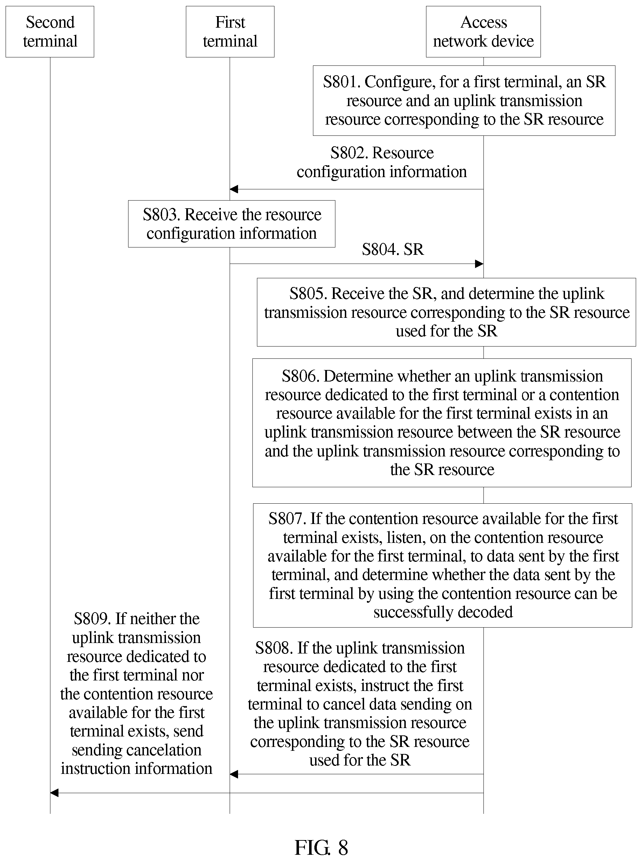

FIG. 8 shows a data transmission method according to an embodiment of the present invention. The method is implemented by using the system shown in FIG. 1. In the embodiment shown in FIG. 8, detailed description is provided by using an example in which a time interval between a subframe in which an SR resource is located and a subframe in which an uplink transmission resource corresponding to the SR resource is located is relatively long. The method includes the following steps.

S801. An access network device configures, for a first terminal, an SR resource and an uplink transmission resource corresponding to the SR resource.

For specific implementation, refer to step S401. Detailed description is omitted herein.

S802. The access network device sends resource configuration information to the first terminal.

For specific implementation, refer to step S402. Detailed description is omitted herein.

S803. The first terminal receives the resource configuration information sent by the access network device.

For specific implementation, refer to step S403. Detailed description is omitted herein.

S804. The first terminal sends an SR by using the SR resource.

S805. The access network device receives the SR, and determines the uplink transmission resource corresponding to the SR resource used for the SR.

S806. The access network device determines whether an uplink transmission resource dedicated to the first terminal or a contention resource available for the first terminal exists in an uplink transmission resource between the SR resource and the uplink transmission resource corresponding to the SR resource; and if the contention resource available for the first terminal exists, performs step S807; if the uplink transmission resource dedicated to the first terminal exists, performs step S808; or if neither the uplink transmission resource dedicated to the first terminal nor the contention resource available for the first terminal exists, performs step S809.

The uplink transmission resource dedicated to the first terminal is a resource used only by the first terminal to send uplink data, and any other terminal does not transmit data by using the resource. The contention resource available for the first terminal is a resource that may be used by a plurality of terminals to transmit data.

S807. The access network device listens, on the contention resource available for the first terminal, to data sent by the first terminal; determines whether the data sent by the first terminal by using the contention resource can be successfully decoded; and if the data sent by the first terminal by using the contention resource can be successfully decoded, performs step S808; or if the data sent by the first terminal by using the contention resource cannot be successfully decoded, performs step S809.

S808. The access network device instructs the first terminal to cancel data sending on the uplink transmission resource corresponding to the SR resource used for the SR.

S809. The access network device sends sending cancelation instruction information to a second terminal.

After the second terminal receives the sending cancelation instruction information, for related actions of the access network device and the first terminal, refer to S409 in the embodiment shown in FIG. 4. Detailed description is omitted herein.

To be specific, in the embodiment shown in FIG. 8, after receiving the SR sent by the first terminal by using the SR resource, the access network device sends the sending cancelation instruction information to the second terminal only in a case other than the following two cases: In a first case, the uplink transmission resource dedicated to the first terminal exists in the uplink transmission resource between the SR resource and the uplink transmission resource corresponding to the SR resource; and in a second case, the contention resource available for the first terminal exists in the uplink transmission resource between the SR resource and the uplink transmission resource corresponding to the SR resource, and the access network device can successfully decode the data sent by the first terminal by using the contention resource. Otherwise, the access network device does not need to instruct the second terminal to cancel sending, and the second terminal may normally transmit data. In addition, the access network device instructs the first terminal to cancel data sending on the uplink transmission resource corresponding to the SR resource used for the SR, thereby increasing an entire system throughput.

The URLLC service data is used as an example for description in all the foregoing embodiments. In actual application, any other service may be used, and the method in the foregoing embodiments may be used provided that a data transmission latency requirement of the service is different from that of another service.

In the foregoing embodiments, it is assumed that a size of a transport block generated by the first terminal is preconfigured. Further, the size of the transport block may not be preconfigured, and only information such as an MCS is configured. The first terminal indicates, to the access network device by using the SR, a size of a transport block that is to be generated by the first terminal and that includes URLLC data. After receiving the SR, the access network device instructs the first terminal to send the transport block at a time-frequency resource location in a subframe. If a time-frequency resource used by the first terminal conflicts with a time-frequency resource used by the second terminal, the access network device instructs the second terminal to cancel transmission.

The following provides apparatus embodiments of the embodiments of the present invention. For details that are not specifically described in the apparatus embodiments, refer to the foregoing corresponding method embodiments.

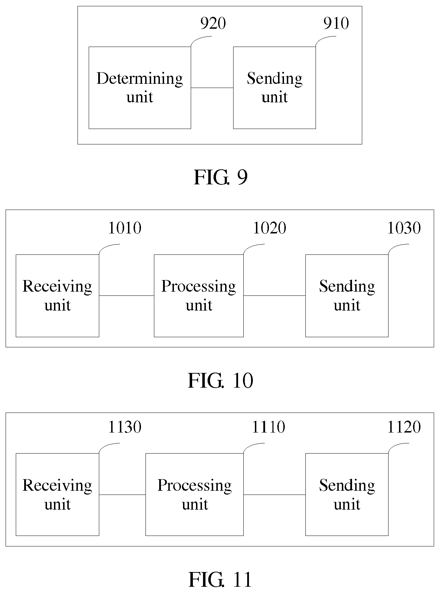

FIG. 9 is a block diagram of a data transmission apparatus according to an embodiment of the present invention. The data transmission apparatus may be implemented as all or a part of a first terminal by using a dedicated hardware circuit or a combination of software and hardware. The data transmission apparatus includes a sending unit 910 and a determining unit 920. The sending unit 910 is configured to send an SR by using a scheduling request SR resource, where the SR is used to request to send uplink data of a specified service. The determining unit 920 is configured to determine an uplink transmission resource corresponding to the SR resource. The sending unit is further configured to send the uplink data of the specified service by using the uplink transmission resource that is corresponding to the SR resource and that is determined by the determining unit.

Optionally, the SR resource includes a frequency resource, a time resource, a code resource, or a time-frequency resource.

Optionally, the SR resource is a time-frequency resource, and the sending unit is configured to send the SR by using the SR resource when an uplink transmission resource available for the first terminal does not exist in an uplink transmission resource between the SR resource and the uplink transmission resource corresponding to the SR resource.

Optionally, the SR is physical layer signaling or higher layer signaling, and the physical layer signaling is a signal transmitted on a PUCCH channel or a PRACH channel.

For related details, refer to the method embodiment in FIG. 4, FIG. 6, or FIG. 8.

It should be noted that the sending unit 910 may be implemented by a transmitter, or by a processor by coordinating with a transmitter; and the determining unit 920 may be implemented by a processor, or by a processor by executing a program instruction in a memory.

FIG. 10 is a block diagram of a data transmission apparatus according to an embodiment of the present invention. The data transmission apparatus may be implemented as all or a part of a second terminal by using a dedicated hardware circuit or a combination of software and hardware. The data transmission apparatus includes a receiving unit 1010 and a processing unit 1020. The receiving unit 1010 receives sending cancelation instruction information sent by the access network device, where the sending cancelation instruction information is sent by the access network device to the second terminal after the access network device receives an SR sent by a first terminal by using an SR resource, and the sending cancelation instruction information is received by the second terminal after obtaining an uplink transmission resource allocated by the access network device to the second terminal. The processing unit 1020 is configured to cancel, based on the sending cancelation instruction information received by the receiving unit, data sending on the uplink transmission resource allocated to the second terminal.

Optionally, the apparatus may further include a sending unit 1030, configured to send capability information to the access network device, where the capability information includes indication information used to indicate whether the second terminal supports sending cancelation in some sub-bands.

Further, the receiving unit 1010 may be further configured to receive conflict uplink transmission resource information sent by the access network device, where the conflict uplink transmission resource information includes information about some or all of uplink transmission resources that are used to transmit a specified service and that are allocated by the access network device to all terminals.

In an implementation of this embodiment, the processing unit 1020 is configured to: determine, based on the conflict uplink transmission resource information obtained by the receiving unit, an uplink transmission resource that overlaps an uplink transmission resource indicated by the conflict uplink transmission resource information and that is in the uplink transmission resource allocated to the second terminal; and cancel data sending on the determined uplink transmission resource.

In another implementation of this embodiment, the conflict uplink transmission resource information includes an identifier of the terminal and the uplink transmission resource that is used to transmit the specified service and that is corresponding to the identifier of the terminal, and the sending cancelation instruction information includes an identifier of the first terminal; and
the processing unit 1020 is configured to: determine, based on the conflict uplink transmission resource information obtained by the receiving unit 1010, an uplink transmission resource that overlaps an uplink transmission resource corresponding to the identifier of the first terminal and that is in the uplink transmission resource allocated to the second terminal; and cancel data sending on the determined uplink transmission resource.

In still another implementation of this embodiment, the sending cancelation instruction information includes information about a time-frequency resource, and the processing module is configured to: determine an uplink transmission resource that overlaps the time-frequency resource in the sending cancelation instruction information and that is in the uplink transmission resource allocated to the second terminal; and cancel data sending on the determined uplink transmission resource.

For related details, refer to the method embodiment in FIG. 4, FIG. 6, or FIG. 8.

It should be noted that the sending unit 1030 may be implemented by a transmitter, or by a processor by coordinating with a transmitter; the receiving unit 1010 may be implemented by a receiver Rx, or by a processor by coordinating with a receiver; and the processing unit 1020 may be implemented by a processor, or by a processor by executing a program instruction in a memory.

FIG. 11 is a block diagram of a data transmission apparatus according to another embodiment of the present invention. The data transmission apparatus may be implemented as all or a part of an access network device by using a dedicated hardware circuit or a combination of software and hardware. The data transmission apparatus includes a processing unit 1110 and a sending unit 1120. The processing unit 1110 is configured to configure, for a first terminal, an SR resource and an uplink transmission resource corresponding to the SR resource, where the SR resource is used by the first terminal to send an SR, the SR is used to request to transmit data of a specified service, and the uplink transmission resource is used by the first terminal to send the data of the specified service. The sending unit 1120 is configured to send resource configuration information to the first terminal, where the resource configuration information includes information about the SR resource and information about the uplink transmission resource corresponding to the SR resource.

Optionally, the apparatus may further include a receiving unit 1130, configured to receive the SR sent by the first terminal by using the SR resource.

Further, the receiving unit 1130 may be further configured to: after receiving the SR sent by the first terminal by using the SR resource, receive service data sent by the first terminal by using the uplink transmission resource corresponding to the SR resource.

Further, the sending unit 1120 may be further configured to send sending cancelation instruction information to a second terminal, where the sending cancelation instruction information is used to instruct the second terminal to cancel data sending on an uplink transmission resource allocated by the access network device to the second terminal.

Further, the processing unit 1110 is further configured to determine whether an uplink transmission resource between the SR resource and the uplink transmission resource corresponding to the SR resource meets a specified condition; and the sending unit is configured to: when the processing unit determines that the uplink transmission resource between the SR resource and the uplink transmission resource corresponding to the SR resource does not meet the specified condition, send the sending cancelation instruction information to the second terminal, where
the specified condition includes:
an uplink transmission resource dedicated to the first terminal exists in the uplink transmission resource between the SR resource and the uplink transmission resource corresponding to the SR resource; or
a contention resource available for the first terminal exists in the uplink transmission resource between the SR resource and the uplink transmission resource corresponding to the SR resource, and the access network device can successfully decode data sent by the first terminal by using the contention resource available for the first terminal.

Optionally, the apparatus further includes:
the receiving unit 1130, configured to receive capability information sent by the second terminal, where the capability information includes indication information used to indicate whether the second terminal supports sending cancelation in some sub-bands.

Further, the sending unit 1120 is further configured to send conflict uplink transmission resource information to the second terminal, where an uplink transmission resource that may be preempted includes a part or all of an uplink transmission resource that is used to transmit the specified service and that is allocated by the access network device to a terminal.

In this embodiment, a transmission subframe of the SR and a transmission subframe of the sending cancelation instruction information are aligned in time; or
a transmission subframe of uplink data of the specified service and a transmission subframe of the sending cancelation instruction information are aligned in time; or
a cell to which the SR resource used for the SR belongs and a cell to which a downlink transmission resource used for the sending cancelation instruction information belongs are a same cell or different cells.

For related details, refer to the method embodiment in FIG. 4, FIG. 6, or FIG. 8.

It should be noted that the sending unit 1120 may be implemented by a transmitter, or by a processor by coordinating with a transmitter; the receiving unit 1130 may be implemented by a receiver Rx, or by a processor by coordinating with a receiver; and the processing unit 1110 may be implemented by a processor, or by a processor by executing a program instruction in a memory.

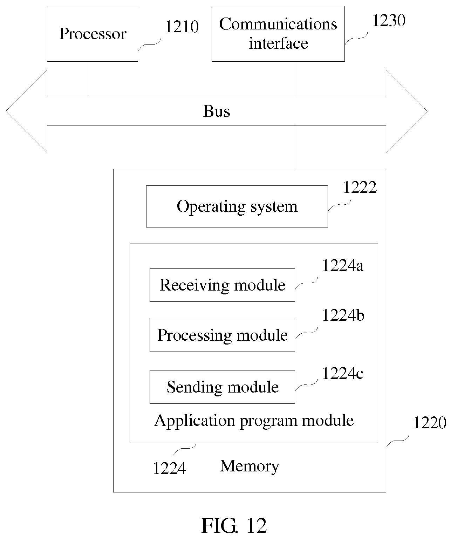

FIG. 12 is a structural diagram of a communications chip according to an embodiment of the present invention. The communications chip is applied to a mobile communications system device such as the foregoing access network device or the foregoing terminal. The communications chip includes a processor 1210, a memory 1220, and a communications interface 1230. The processor 1210 is separately connected to the memory 1220 and the communications interface 1230 by using a bus.

The communications interface 1230 is configured to implement communication with another communications device.

The processor 1210 includes one or more processing cores. The processor 1210 runs an operating system or an application program module.

Optionally, the memory 1220 may store an operating system 1222 and an application program module 1224 required by at least one function. Optionally, the application program module 1224 includes a receiving module 1224a, a processing module 1224b, and a sending module 1224c. The receiving module 1224a is configured to implement receiving-related steps. The processing module 1224b is configured to implement calculation-related or processing-related steps. The sending module 1224c is configured to implement sending-related steps.

In addition, the memory 1220 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

A person skilled in the art may understand that the structure shown in FIG. 12 does not constitute a limitation on the communications chip, and the communications chip may include components more or fewer than those shown in the figure, or combine some components, or have different component arrangements.

## Claims

1. A data transmission method performed by a second terminal, wherein the method comprises:
obtaining (S405), by the second terminal, an uplink transmission resource allocated by an access network device;
receiving (S406, S409), by the second terminal, sending cancelation instruction information sent by the access network device, wherein the sending cancelation instruction information is sent by the access network device to the second terminal after the access network device receives an scheduling request, SR, sent by a first terminal by using an SR resource; and
canceling (S409), by the second terminal based on the sending cancelation instruction information, data sending on the uplink transmission resource allocated to the second terminal;
**characterized in that**, if the second terminal is sending data when receiving the sending cancelation instruction information, the second terminal stops sending a currently transmitted data block.

2. The method according to claim 1, wherein the method further comprises:
receiving, by the second terminal, conflict uplink transmission resource information sent by the access network device, wherein the conflict uplink transmission resource information comprises information about a part or all of an uplink transmission resource that is used to transmit a specified service and that is allocated by the access network device.

3. The method according to claim 2, wherein the canceling, by the second terminal based on the instruction information, data sending on the uplink transmission resource allocated to the second terminal comprises:
determining, by the second terminal based on the obtained conflict uplink transmission resource information, an uplink transmission resource that overlaps an uplink transmission resource indicated by the conflict uplink transmission resource information and that is in the uplink transmission resource allocated to the second terminal; and
canceling, by the second terminal, data sending on the determined uplink transmission resource.

4. The method according to any one of claims 1-3, wherein the sending cancelation instruction information comprises information about a time-frequency resource, and the canceling, by the second terminal based on the sending cancelation instruction information, data sending on the uplink transmission resource allocated to the second terminal comprises:
determining, by the second terminal, an uplink transmission resource that overlaps the time-frequency resource indicated in the sending cancelation instruction information and that is in the uplink transmission resource allocated to the second terminal; and
canceling, by the second terminal, data sending on the determined uplink transmission resource.

5. A data transmission method performed by an access network device, wherein the method comprises:
configuring (S401), by the access network device for a first terminal, an SR resource and an uplink transmission resource corresponding to the SR resource, wherein the SR resource is used by the first terminal to send an SR, the SR is used to request to transmit data of a specified service, and the uplink transmission resource is used by the first terminal to send the data of the specified service;
sending (S402, S403), by the access network device, resource configuration information to the first terminal, wherein the resource configuration information comprises information about the SR resource and information about the uplink transmission resource corresponding to the SR resource;
wherein the method further comprises: receiving (S404) the SR sent by the first terminal by using the SR resource;
after receiving the SR sent by the first terminal by using the SR resource, receiving (S407, S408), by the access network device, service data sent by the first terminal by using the uplink transmission resource corresponding to the SR resource; and
sending (S406), by the access network device, sending cancelation instruction information to a second terminal, wherein the sending cancelation instruction information is used to instruct the second terminal to cancel data sending on an uplink transmission resource allocated by the access network device to the second terminal;
**characterized in that** the access network device performs the sending (S406) sending cancelation instruction information to the second terminal while the second terminal is sending data.

6. A second terminal, wherein the second terminal comprises:
a receiving unit (1010), configured to receive sending cancelation instruction information sent by the access network device after obtaining an uplink transmission resource allocated by the access network device to the second terminal, wherein the sending cancelation instruction information is sent by the access network device to the second terminal after the access network device receives an SR sent by a first terminal by using an SR resource; and
a processing unit (1020), configured to cancel, based on the sending cancelation instruction information received by the receiving unit, data sending on the uplink transmission resource allocated to the second terminal;
**characterized in that**, if the second terminal is sending data when receiving the sending cancelation instruction information, the second terminal stops sending a currently transmitted data block.

7. The second terminal according to claim 6, wherein the receiving unit (1010) is further configured to receive conflict uplink transmission resource information sent by the access network device, wherein the conflict uplink transmission resource information comprises information about some or all of uplink transmission resources that are used to transmit a specified service and that are allocated by the access network device.

8. The second terminal according to claim 7, wherein the processing unit (1020) is configured to: determine, based on the conflict uplink transmission resource information obtained by the receiving unit, an uplink transmission resource that overlaps an uplink transmission resource indicated by the conflict uplink transmission resource information and that is in the uplink transmission resource allocated to the second terminal; and cancel data sending on the determined uplink transmission resource.

9. The second terminal according to any one of claims 6-8, wherein the sending cancelation instruction information comprises information about a time-frequency resource, and the processing unit (1020) is configured to: determine an uplink transmission resource that overlaps the time-frequency resource in the sending cancelation instruction information and that is in the uplink transmission resource allocated to the second terminal; and cancel data sending on the determined uplink transmission resource.

10. An access network device, wherein the access network device comprises:
a processing unit (1110), configured to configure, for a first terminal, an SR resource and an uplink transmission resource corresponding to the SR resource, wherein the SR resource is used by the first terminal to send an SR, the SR is used to request to transmit data of a specified service, and the uplink transmission resource is used by the first terminal to send the data of the specified service;
a sending unit (1120), configured to send resource configuration information to the first terminal, wherein the resource configuration information comprises information about the SR resource and information about the uplink transmission resource corresponding to the SR resource; and
a receiving unit (1130), configured to receive the SR sent by the first terminal by using the SR resource;
wherein the receiving unit (1130) is further configured to: after receiving the SR sent by the first terminal by using the SR resource, receive service data sent by the first terminal by using the uplink transmission resource corresponding to the SR resource; and
wherein the sending unit (1120) is further configured to send sending cancelation instruction information to a second terminal, wherein the sending cancelation instruction information is used to instruct the second terminal to cancel data sending on an uplink transmission resource allocated by the access network device to the second terminal;
**characterized in that** the sending unit (1120) is configured to send the sending cancelation instruction information to the second terminal while the second terminal is sending data.

## Patentansprüche

1. Datenübertragungsverfahren, das von einem zweiten Endgerät durchgeführt wird, wobei das Verfahren Folgendes umfasst:
Einholen (S405), durch das zweite Endgerät, einer Uplink-Übertragungsressource, die von einer Zugangsnetzwerkvorrichtung zugewiesen wird;
Empfangen (S406, S409), durch das zweite Endgerät, einer Sendungsabbruchanweisungsinformation, die von der Zugangsnetzwerkvorrichtung gesendet wird, wobei die Sendungsabbruchanweisungsinformation von der Zugangsnetzwerkvorrichtung an das zweite Endgerät gesendet wird, nachdem die Zugangsnetzwerkvorrichtung eine Terminierungsanfrage, SR (scheduling request) empfangen hat, die von einem ersten Endgerät unter Verwendung einer SR-Ressource gesendet wird; und
Abbrechen (S409), durch das zweite Endgerät basierend auf der Sendungsabbruchanweisungsinformation, der Datensendung auf der Uplink-Übertragungsressource, die dem zweiten Endgerät zugewiesen ist;
**dadurch gekennzeichnet, dass**, falls das zweite Endgerät Daten sendet, wenn es die Sendungsabbruchanweisungsinformation empfängt, das zweite Endgerät das Senden eines aktuell übertragenen Datenblocks anhält.

2. Verfahren nach Anspruch 1, wobei das Verfahren ferner Folgendes umfasst:
Empfangen, durch das zweite Endgerät, einer Konflikt-Uplink-Übertragungsressourceninformation, die von der Zugangsnetzwerkvorrichtung gesendet wird, wobei die Konflikt-Uplink-Übertragungsressourceninformation eine Information über einen Teil oder die Gesamtheit einer Uplink-Übertragungsressource umfasst, die verwendet wird, um einen bestimmten Dienst zu übertragen und die von der Zugangsnetzwerkvorrichtung zugewiesen wird.

3. Verfahren nach Anspruch 2, wobei das Abbrechen, durch das zweite Endgerät basierend auf der Anweisungsinformation, der Datensendung auf der Uplink-Übertragungsressource, die dem zweiten Endgerät zugewiesen ist, Folgendes umfasst:
Ermitteln, durch das zweite Endgerät basierend auf der eingeholten Konflikt-Uplink-Übertragungsressourceninformation, einer Uplink-Übertragungsressource, die eine Uplink-Übertragungsressource, die von der Konflikt-Uplink-Übertragungsressourceninformation angegeben wird, überlappt und die sich in der Uplink-Übertragungsressource, die dem zweiten Endgerät zugewiesen ist, befindet; und
Abbrechen, durch das zweite Endgerät, der Datensendung auf der ermittelten Uplink-Übertragungsressource.

4. Verfahren nach einem der Ansprüche 1-3, wobei die Sendungsabbruchanweisungsinformation eine Information über eine Zeit-Frequenz-Ressource umfasst und das Abbrechen, durch das zweite Endgerät basierend auf der Sendungsabbruchanweisungsinformation, der Datensendung auf der Uplink-Übertragungsressource, die dem zweiten Endgerät zugewiesen ist, Folgendes umfasst:
Ermitteln, durch das zweite Endgerät, einer Uplink-Übertragungsressource, die die Zeit-Frequenz-Ressource überlappt, die in der Sendungsabbruchanweisungsinformation angegeben ist, und die sich in der Uplink-Übertragungsressource, die dem zweiten Endgerät zugewiesen ist, befindet; und
Abbrechen, durch das zweite Endgerät, der Datensendung auf der ermittelten Uplink-Übertragungsressource.

5. Datenübertragungsverfahren, das von einer Zugangsnetzwerkvorrichtung durchgeführt wird, wobei das Verfahren Folgendes umfasst:
Konfigurieren (S401), durch die Zugangsnetzwerkvorrichtung für ein erstes Endgerät, einer SR-Ressource und einer Uplink-Übertragungsressource, die der SR-Ressource entspricht, wobei die SR-Ressource von dem ersten Endgerät verwendet wird, um eine SR zu senden, wobei die SR verwendet wird, um anzufragen, Daten eines bestimmten Dienstes zu übertragen, und die Uplink-Übertragungsressource von dem ersten Endgerät verwendet wird, um die Daten des bestimmten Dienstes zu senden;
Senden (S402, S403), durch die Zugangsnetzwerkvorrichtung, einer Ressourcenkonfigurationsinformation an das erste Endgerät, wobei die Ressourcenkonfigurationsinformation eine Information über die SR-Ressource und eine Information über die Uplink-Übertragungsressource, die der SR-Ressource entspricht, umfasst;
wobei das Verfahren ferner Folgendes umfasst: Empfangen (S404) der SR, die von dem ersten Endgerät unter Verwendung der SR-Ressource gesendet wird;
nach dem Empfangen der SR, die von dem ersten Endgerät unter Verwendung der SR-Ressource gesendet wird, Empfangen (S407, S408), durch die Zugangsnetzwerkvorrichtung, von Dienstdaten,
die von dem ersten Endgerät unter Verwendung der Uplink-Übertragungsressource, die der SR-Ressource entspricht, gesendet werden; und
Senden (S406), durch die Zugangsnetzwerkvorrichtung, einer Sendungsabbruchanweisungsinformation an ein zweites Endgerät, wobei die Sendungsabbruchanweisungsinformation verwendet wird, um das zweite Endgerät anzuweisen, die Datensendung auf einer Uplink-Übertragungsressource, die durch die Zugangsnetzwerkvorrichtung dem zweiten Endgerät zugewiesen ist, abzubrechen;
**dadurch gekennzeichnet, dass** die Zugangsnetzwerkvorrichtung das Senden (S406) der Sendungsabbruchanweisungsinformation an das zweite Endgerät durchführt, während das zweite Endgerät Daten sendet.

6. Zweites Endgerät, wobei das zweite Endgerät Folgendes umfasst:
eine Empfangseinheit (1010), die so konfiguriert ist, dass sie eine Sendungsabbruchanweisungsinformation empfängt, die von der Zugangsnetzwerkvorrichtung nach dem Einholen einer Uplink-Übertragungsressource, die von der Zugangsnetzwerkvorrichtung dem zweiten Endgerät zugewiesen ist, gesendet wird, wobei die Sendungsabbruchanweisungsinformation von der Zugangsnetzwerkvorrichtung an das zweite Endgerät gesendet wird, nachdem die Zugangsnetzwerkvorrichtung eine SR empfängt, die von einem ersten Endgerät unter Verwendung einer SR-Ressource gesendet wird; und
eine Verarbeitungseinheit (1020), die so konfiguriert ist, dass sie basierend auf der Sendungsabbruchanweisungsinformation, die von der Empfangseinheit empfangen wird, die Datensendung auf der Uplink-Übertragungsressource, die dem zweiten Endgerät zugewiesen ist, abbricht;
**dadurch gekennzeichnet, dass**, falls das zweite Endgerät Daten sendet, wenn es die Sendungsabbruchanweisungsinformation empfängt, das zweite Endgerät das Senden eines aktuell übertragenen Datenblocks anhält.

7. Zweites Endgerät nach Anspruch 6, wobei die Empfangseinheit (1010) ferner so konfiguriert ist, dass sie eine Konflikt-Uplink-Übertragungsressourceninformation empfängt, die von der Zugangsnetzwerkvorrichtung gesendet wird, wobei die Konflikt-Uplink-Übertragungsressourceninformation eine Information über einige oder alle der Uplink-Übertragungsressourcen, die verwendet werden, um einen bestimmten Dienst zu übertragen, und die von der Zugangsnetzwerkvorrichtung zugewiesen sind, umfasst.

8. Zweites Endgerät nach Anspruch 7, wobei die Verarbeitungseinheit (1020) wie folgt konfiguriert ist: dass sie basierend auf der Konflikt-Uplink-Übertragungsressourceninformation, die von der Empfangseinheit eingeholt wird, eine Uplink-Übertragungsressource ermittelt, die eine Uplink-Übertragungsressource überlappt, die von der Konflikt-Uplink-Übertragungsressourceninformation angegeben wird, und die sich in der Uplink-Übertragungsressource, die dem zweiten Endgerät zugewiesen ist, befindet; und die Datensendung auf der ermittelten Uplink-Übertragungsressource abbricht.

9. Zweites Endgerät nach einem der Ansprüche 6-8, wobei die Sendungsabbruchanweisungsinformation eine Information über eine Zeit-Frequenz-Ressource umfasst und die Verarbeitungseinheit (1020) wie folgt konfiguriert ist: dass sie eine Uplink-Übertragungsressource ermittelt, die die Zeit-Frequenz-Ressource in der Sendungsabbruchanweisungsinformation überlappt und die sich in der Uplink-Übertragungsressource, die dem zweiten Endgerät zugewiesen ist, befindet; und die Datensendung auf der ermittelten Uplink-Übertragungsressource abbricht.

10. Zugangsnetzwerkvorrichtung, wobei die Zugangsnetzwerkvorrichtung Folgendes umfasst:
eine Verarbeitungseinheit (1110), die so konfiguriert ist, dass sie für ein erstes Endgerät eine SR-Ressource und eine Uplink-Übertragungsressource, die der SR-Ressource entspricht, konfiguriert, wobei die SR-Ressource von dem ersten Endgerät verwendet wird, um eine SR zu senden, wobei die SR verwendet wird, um anzufragen, Daten eines bestimmten Dienstes zu übertragen, und die Uplink-Übertragungsressource von dem ersten Endgerät verwendet wird, um die Daten des bestimmten Dienstes zu senden;
eine Sendeeinheit (1120), die so konfiguriert ist, dass sie eine Ressourcenkonfigurationsinformation an das erste Endgerät sendet, wobei die Ressourcenkonfigurationsinformation eine Information über die SR-Ressource und eine Information über die Uplink-Übertragungsressource, die der SR-Ressource entspricht, umfasst; und
eine Empfangseinheit (1130), die so konfiguriert ist, dass sie die SR, die von dem ersten Endgerät unter Verwendung der SR-Ressource gesendet wird, empfängt;
wobei die Empfangseinheit (1130) ferner wie folgt konfiguriert ist: dass sie nach dem Empfangen der SR, die von dem ersten Endgerät unter Verwendung der SR-Ressource gesendet wird, Dienstdaten empfängt, die von dem ersten Endgerät unter Verwendung der Uplink-Übertragungsressource, die der SR-Ressource entspricht, gesendet werden; und
wobei die Sendeeinheit (1120) ferner so konfiguriert ist, dass sie eine Sendungsabbruchanweisungsinformation an ein zweites Endgerät sendet, wobei die Sendungsabbruchanweisungsinformation verwendet wird, um das zweite Endgerät anzuweisen, die Datensendung auf einer Uplink-Übertragungsressource, die durch die Zugangsnetzwerkvorrichtung dem zweiten Endgerät zugewiesen ist, abzubrechen;
**dadurch gekennzeichnet, dass** die Sendeeinheit (1120) so konfiguriert ist, dass sie die Sendungsabbruchanweisungsinformation an das zweite Endgerät sendet, während das zweite Endgerät Daten sendet.

## Revendications

1. Procédé de transmission de données effectué par un second terminal, dans lequel le procédé comprend :
l'obtention (S405), par le second terminal, d'une ressource de transmission de liaison montante allouée par un dispositif de réseau d'accès ;
la réception (S406, S409), par le second terminal, d'une information d'instruction d'annulation d'envoi envoyée par le dispositif de réseau d'accès, dans lequel l'information d'instruction d'annulation d'envoi est envoyée par le dispositif de réseau d'accès au second terminal après que le dispositif de réseau d'accès a reçu une demande de planification, SR, envoyée par un premier terminal en utilisant une ressource SR ; et
l'annulation (S409), par le second terminal sur la base de l'information d'instruction d'annulation d'envoi, de l'envoi de données sur la ressource de transmission de liaison montante allouée au second terminal ;
**caractérisé en ce que**, si le second terminal envoie des données lors de la réception de l'information d'instruction d'annulation d'envoi, le second terminal arrête l'envoi d'un bloc de données en cours de transmission.

2. Procédé selon la revendication 1, dans lequel le procédé comprend en outre :
la réception, par le second terminal, d'une information de ressource de transmission de liaison montante de conflit envoyée par le dispositif de réseau d'accès, dans lequel l'information de ressource de transmission de liaison montante de conflit comprend une information sur une partie ou la totalité d'une ressource de transmission de liaison montante qui est utilisée pour transmettre un service spécifié et qui est allouée par le dispositif de réseau d'accès.

3. Procédé selon la revendication 2, dans lequel l'annulation, par le second terminal sur la base de l'information d'instruction, de l'envoi de données sur la ressource de transmission de liaison montante allouée au second terminal comprend :
la détermination, par le second terminal sur la base de l'information de ressource de transmission de liaison montante de conflit obtenue, d'une ressource de transmission de liaison montante qui chevauche une ressource de transmission de liaison montante indiquée par l'information de ressource de transmission de liaison montante de conflit et qui est dans la ressource de transmission de liaison montante allouée au second terminal ; et
l'annulation, par le second terminal, de l'envoi de données sur la ressource de transmission de liaison montante déterminée.

4. Procédé selon l'une quelconque des revendications 1 à 3, dans lequel l'information d'instruction d'annulation d'envoi comprend une information sur une ressource temps-fréquence, et l'annulation, par le second terminal sur la base de l'information d'instruction d'annulation d'envoi, de l'envoi de données sur la ressource de transmission de liaison montante allouée au second terminal comprend :
la détermination, par le second terminal, d'une ressource de transmission de liaison montante qui chevauche la ressource temps-fréquence indiquée dans l'information d'instruction d'annulation d'envoi et qui est dans la ressource de transmission de liaison montante allouée au second terminal ; et
l'annulation, par le second terminal, de l'envoi de données sur la ressource de transmission de liaison montante déterminée.

5. Procédé de transmission de données effectué par un dispositif de réseau d'accès, dans lequel le procédé comprend :
la configuration (S401), par un dispositif de réseau d'accès pour un premier terminal, d'une ressource SR et d'une ressource de transmission de liaison montante correspondant à la ressource SR, dans lequel la ressource SR est utilisée par le premier terminal pour envoyer une SR, la SR est utilisée pour demander de transmettre des données d'un service spécifié, et la ressource de transmission de liaison montante est utilisée par le premier terminal pour envoyer les données du service spécifié ;
l'envoi (S402, S403), par le dispositif de réseau d'accès, d'une information de configuration de ressource au premier terminal, dans lequel l'information de configuration de ressource comprend une information sur la ressource SR et une information sur la ressource de transmission de liaison montante correspondant à la ressource SR ;
dans lequel le procédé comprend en outre : la réception (S404) de la SR envoyée par le premier terminal en utilisant la ressource SR ;
après la réception de la SR envoyée par le premier terminal en utilisant la ressource SR, la réception (S407, S408), par le dispositif de réseau d'accès, de données de service envoyées par le premier terminal en utilisant la ressource de transmission de liaison montante correspondante à la ressource SR ; et
l'envoi (S406), par le dispositif de réseau d'accès, d'une information d'instruction d'annulation d'envoi à un second terminal, dans lequel l'information d'instruction d'annulation d'envoi est utilisée pour donner pour instruction au second terminal d'annuler l'envoi de données sur une ressource de transmission de liaison montante allouée par le dispositif de réseau d'accès au second terminal ;
**caractérisé en ce que** le dispositif de réseau d'accès effectue l'envoi (S406) de l'information d'instruction d'annulation d'envoi au second terminal pendant que le second terminal envoie des données.

6. Second terminal, dans lequel le second terminal comprend :
une unité de réception (1010), configurée pour recevoir une information d'instruction d'annulation d'envoi envoyée par le dispositif de réseau d'accès après l'obtention d'une ressource de transmission de liaison montante allouée par le dispositif de réseau d'accès au second terminal, dans lequel l'information d'instruction d'annulation d'envoi est envoyée par le dispositif de réseau d'accès au second terminal après que le dispositif de réseau d'accès a reçu une SR envoyée par un premier terminal en utilisant une ressource SR ; et
une unité de traitement (1020), configurée pour annuler, sur la base de l'information d'instruction d'annulation d'envoi reçue par l'unité de réception, l'envoi de données sur la ressource de transmission de liaison montante allouée au second terminal ; **caractérisé en ce que**, si le second terminal envoie des données lors de la réception de l'information d'instruction d'annulation d'envoi, le second terminal arrête l'envoi d'un bloc de données en cours de transmission.

7. Second terminal selon la revendication 6, dans lequel l'unité de réception (1010) est en outre configurée pour recevoir une information de ressource de transmission de liaison montante de conflit envoyée par le dispositif de réseau d'accès, dans lequel l'information de ressource de transmission de liaison montante de conflit comprend une information sur certaines ou la totalité des ressources de transmission de liaison montante qui sont utilisées pour transmettre un service spécifié et qui sont alloués par le dispositif de réseau d'accès.

8. Second terminal selon la revendication 7, dans lequel l'unité de traitement (1020) est configurée pour : déterminer, sur la base de l'information de ressource de transmission de liaison montante de conflit obtenue par l'unité de réception, une ressource de transmission de liaison montante qui chevauche une ressource de transmission de liaison montante indiquée par l'information de ressource de transmission de liaison montante de conflit et qui est dans la ressource de transmission de liaison montante allouée au second terminal ; et annuler l'envoi de données sur la ressource de transmission de liaison montante déterminée.

9. Second terminal selon l'une quelconque des revendications 6 à 8, dans lequel l'information d'instruction d'annulation d'envoi comprend une information sur une ressource temps-fréquence, et l'unité de traitement (1020) est configurée pour :
déterminer une ressource de transmission de liaison montante qui chevauche la ressource temps-fréquence dans l'information d'instruction d'annulation d'envoi et qui est dans la ressource de transmission de liaison montante allouée au second terminal ; et annuler l'envoi de données sur la ressource de transmission de liaison montante déterminée.

10. Dispositif de réseau d'accès, dans lequel le dispositif de réseau d'accès comprend :
une unité de traitement (1110), configurée pour configurer, pour un premier terminal, une ressource SR et une ressource de transmission de liaison montante correspondant à la ressource SR, dans lequel la ressource SR est utilisée par le premier terminal pour envoyer une SR, la SR est utilisée pour demander de transmettre des données d'un service spécifié, et la ressource de transmission de liaison montante est utilisée par le premier terminal pour envoyer les données du service spécifié ;
une unité d'envoi (1120), configurée pour envoyer une information de configuration de ressource au premier terminal, dans lequel l'information de configuration de ressource comprend une information sur la ressource SR et une information sur la ressource de transmission de liaison montante correspondant à la ressource SR ; et
une unité de réception (1130), configurée pour recevoir la SR envoyée par le premier terminal en utilisant la ressource SR ; dans lequel l'unité de réception (1130) est en outre configurée pour : après la réception de la SR envoyée par le premier terminal en utilisant la ressource SR, recevoir des données de service envoyées par le premier terminal en utilisant la ressource de transmission de liaison montante correspondant à la ressource SR ; et
dans lequel l'unité d'envoi (1120) est en outre configurée pour envoyer une information d'instruction d'annulation d'envoi à un second terminal, dans lequel l'information d'instruction d'annulation d'envoi est utilisée pour donner pour instruction au second terminal d'annuler l'envoi de données sur une ressource de transmission de liaison montante allouée par le dispositif de réseau d'accès au second terminal ;
**caractérisé en ce que** l'unité d'envoi (1120) est configurée pour envoyer l'information d'instruction d'annulation d'envoi au second terminal pendant que le second terminal envoie des données.
